Europäisches Patentamt

European Patent Office

Office européen des brevets

(19)

(11) **EP 1 681 178 A1**

(12) **DEMANDE DE BREVET EUROPEEN**

(43) Date de publication:
**19.07.2006 Bulletin 2006/29**

(51) Int Cl.:
***B60C 17/06*** *(2006.01)*

(21) Numéro de dépôt: **06100042.8**

(22) Date de dépôt: **03.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **18.01.2005 FR 0500497**

(71) Demandeurs:
• **Societe de Technologie Michelin**
  **63000 Clermont-Ferrand (FR)**
• **MICHELIN RECHERCHE ET TECHNIQUE S.A.**
  **1763 Granges-Paccot (CH)**
• **Robert Bosch GmbH**
  **70839 Gerlingen-Schillerhöhe (DE)**

(72) Inventeurs:
• **Cohen, Patrick**
  **63440, Champs (FR)**
• **Hönle, Stephan**
  **70825, Korntal-Münchingen (DE)**
• **Nimmo, Matthew**
  **71462, Ludwigsburg (DE)**
• **Pineau, Jacky**
  **63112, Blanzat (FR)**

(74) Mandataire: **Lasson, Cédric Y. M.**
  **M. F. P. Michelin**
  **23, place des Carmes Dechaux**
  **SGD/LG/PI - F35 - Ladoux**
  **63040 Clermont-Ferrand Cedex 9 (FR)**

(54) **Système comprenant un ensemble roulant allégé permettant le roulage à plat et un dispositif ESP**

(57)    Système, comprenant (1) au moins un ensemble roulant formé par une jante, un pneumatique et un anneau de soutien de bande de roulement du pneumatique, destiné à supporter la charge du pneumatique en cas de perte notable de pression et (2) un dispositif de régulation électronique du comportement dynamique d'un véhicule équipé de l'ensemble roulant, le système étant caractérisé en ce que le ratio *l* /L entre la largeur axiale *l* de l'anneau de soutien et la largeur axiale L de la bande de roulement est inférieur ou égal à 0.30.

**FIG. 3**

EP 1 681 178 A1

**Description**

**Domaine de l'invention**

La présente invention concerne les ensembles roulants comprenant un pneumatique conçu pour roulage à plat. L'invention concerne également les systèmes de régulation électronique du comportement dynamique d'un véhicule.

**Définitions**

Par « ensemble roulant », on entend l'ensemble formé par une roue, un pneumatique monté sur la roue et éventuellement un anneau de soutien à l'intérieur du pneumatique.
Par « roulage à plat » ou « roulage en mode étendu », on entend le roulage d'un pneumatique dont la pression de gonflage est anormalement abaissée par rapport à la pression nominale d'emploi du pneumatique, la pression de gonflage pouvant même être nulle.

**Arrière-plan technologique**

On connaît des pneumatiques ou des systèmes pour véhicules de tourisme qui sont capables de fonctionner à pression réduite ou nulle dans le but de garantir ou d'étendre la mobilité du véhicule par rapport à un pneumatique conventionnel, par exemple après une crevaison. Ces pneumatiques ou systèmes sont communément appelés « pour roulage à plat » ou « run flat » du fait qu'ils sont capables de rouler lorsqu'ils sont à plat. Un des concepts permettant cette performance est basé sur une rigidité importante des flancs du pneumatique qui peuvent alors travailler en compression radiale et supporter la bande de roulement. Ce concept (voir, par exemple, le brevet US 5968294) est connu sous l'appellation « SST » (Self Supporting Tyre) ou « ZP » (Zero Pressure). Un autre concept (voir, par exemple, les brevets US 6092575 et US 6418992) utilise un anneau de soutien placé à l'intérieur du pneumatique afin de limiter sa flèche. Le système proposé commercialement sous la dénomination « PAX System » est un exemple de mise en oeuvre de ce concept. Ce type de solution permet au véhicule de parcourir après une crevaison une distance importante, par exemple 200 km, à une vitesse limitée, par exemple 80 km/h. Ceci permet à l'utilisateur du véhicule de continuer son voyage et d'effectuer la réparation ultérieurement alors qu'un pneumatique conventionnel qui a subi une crevaison doit être réparé ou remplacé immédiatement. La mobilité du véhicule se trouve donc largement étendue.
L'utilisation d'un système de ce type au lieu d'un ensemble roulant conventionnel induit un certain nombre de changements au niveau des caractéristiques du véhicule. En particulier, l'utilisation d'un anneau de soutien à l'intérieur du pneumatique induit une augmentation de la masse de l'ensemble roulant, ce qui va à l'encontre des efforts des constructeurs d'automobiles visant à réduire la masse du véhicule et en particulier les masses tournantes. Il a été essayé de réduire les dimensions de l'anneau pour minimiser le poids supplémentaire, mais il s'avère que la marge de manoeuvre dans la miniaturisation de l'anneau de soutien est très restreinte : la diminution de la hauteur h ou de la largeur $l$ de l'anneau de soutien au delà de certaines limites induit une dégradation du comportement du véhicule et une diminution de sa mobilité. Ainsi, pour garantir une mobilité de l'ordre de 200 km ou plus à une vitesse de l'ordre de 80 km/h ou plus, le ratio l/L (L étant la largeur de la bande de roulement du pneumatique) doit être supérieur à 0.30 et le ratio h/H (H étant la hauteur du pneumatique) doit être supérieur à 0.35.
Un des buts de l'invention est de permettre d'alléger le poids de l'ensemble roulant tout en garantissant la mobilité en roulage à plat et une stabilité latérale satisfaisante du véhicule.
Ce but est atteint par un système comprenant :

(1) au moins un ensemble roulant formé par une jante, un pneumatique et un anneau de soutien de bande de roulement du pneumatique, destiné à supporter la charge du pneumatique en cas de perte notable de pression ;

(2) un dispositif de régulation électronique du comportement dynamique d'un véhicule équipé de l'ensemble roulant, le système étant caractérisé en ce que le ratio $l$/L entre la largeur axiale $l$ de l'anneau de soutien et la largeur axiale L de la bande de roulement est inférieur ou égal à 0.30.

Le but est également atteint par un système comprenant :

(1) au moins un ensemble roulant formé par une jante, un pneumatique et un anneau de soutien de bande de roulement du pneumatique, destiné à supporter la charge du pneumatique en cas de perte notable de pression ;

(2) un dispositif de régulation électronique du comportement dynamique d'un véhicule équipé de l'ensemble roulant, le système étant caractérisé en ce que le ratio h/H entre la hauteur radiale h de l'anneau de soutien et la hauteur radiale H du pneumatique est inférieur ou égal à 0.35. Il est possible de combiner avantageusement ces deux approches et d'utiliser un anneau de soutien dimensionné de façon à ce que le ratio l/L entre la largeur axiale *l* de l'anneau de soutien et la largeur axiale L de la bande de roulement soit inférieur ou égal à 0.30 et le ratio h/H entre la hauteur radiale h de l'anneau de soutien et la hauteur radiale H du pneumatique soit inférieur ou égal à 0.35.

Selon un mode de réalisation préférentiel, le système comprend également des moyens permettant de détecter que l'anneau de soutien est en contact avec le pneumatique et au moins un paramètre d'un algorithme du dispositif de régulation est modifié lorsqu'un contact entre l'anneau de soutien et le pneumatique est détecté. Un tel dispositif de régulation a été décrit dans le document WO 2004/101336.

La détection du contact entre l'anneau de soutien et le pneumatique peut être effectuée par des moyens très divers. Il est possible d'utiliser un capteur mécanique de contact, mais on peut également employer un moyen de mesure de la pression de gonflage du pneumatique. Il est en effet possible d'établir une correspondance entre la pression de gonflage du pneumatique et l'existence d'un contact entre l'anneau de soutien. Tous les moyens connus de déterminer la pression de gonflage peuvent donc être utilisés, comme les capteurs de pression, des moyen d'analyse des vitesses de rotation de l'ensemble des roues du véhicule, des moyen d'analyse des accélérations verticales de l'ensemble des roues du véhicule etc. Enfm, d'autres moyens peuvent être mis en oeuvre pour déterminer que le contact entre l'anneau de soutien est réalisé ; on utilise notamment des moyens de détection de vibrations caractéristiques, y compris de signaux acoustiques caractéristiques.

L'invention sera mieux comprise grâce à la description des dessins selon lesquels:

la figure 1 montre un ensemble roulant pour roulage à plat selon l'art antérieur ;

la figure 2 représente schématiquement, en section méridienne, une jante et un anneau de soutien selon l'art antérieur ;

la figure 3 représente schématiquement, en section méridienne, une jante et un anneau de soutien selon l'invention ;

la figure 4 représente schématiquement la loi de frottement longitudinal $\mu(G)$ pour différents types d'ensembles roulants ;

la figure 5 représente schématiquement un véhicule sur le point d'effectuer une manoeuvre dite « J turn » ;

la figure 6 représente un diagramme « en toile d'araignée » résumant des résultats d'essais.

## Description de modes de réalisation

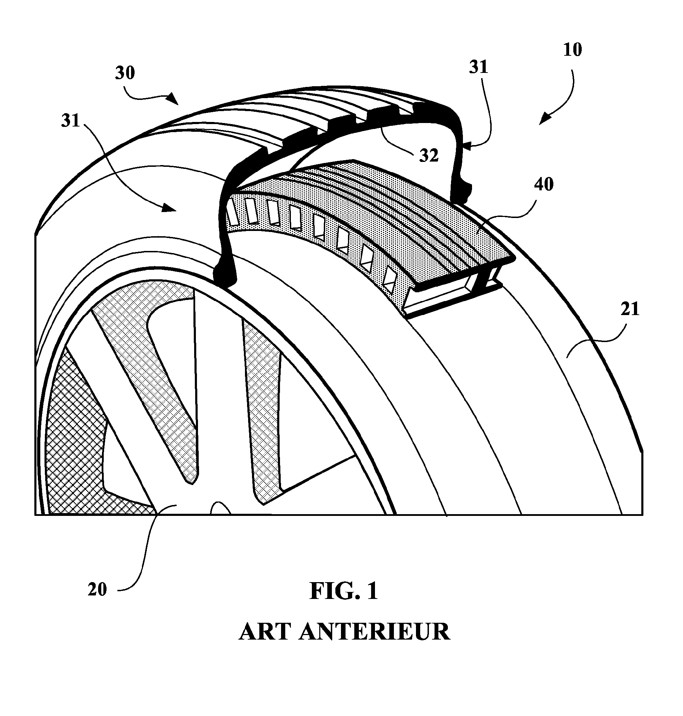

La figure 1 représente schématiquement en perspective une coupe partielle d'un ensemble roulant 10 pour roulage à plat de type « PAX system » comprenant une roue 20 avec sa jante 21, un pneumatique 30 pourvu de flancs 31 et d'un sommet 32 et un anneau de soutien 40. Lorsque le pneu se dégonfle, par exemple suite à une crevaison, le poids du véhicule fait fléchir les flancs 31 de façon à ce que, dans la proximité de la zone de contact entre le pneumatique 30 et la chaussée, le sommet 32 entre en contact avec l'anneau de soutien 40.

Comme le montre la figure 1, l'anneau de soutien 40 n'est pas plein mais possède une géométrie complexe résultant des efforts pour alléger le poids de l'anneau de soutien 40 et, par conséquent, de l'ensemble roulant 10.

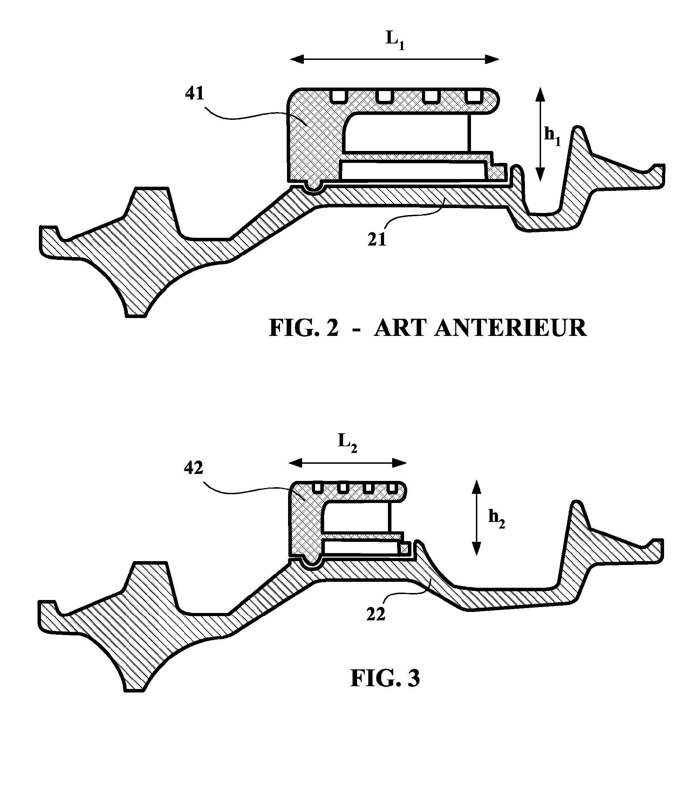

La figure 2 représente schématiquement, en section méridienne, certains éléments d'un ensemble roulant pour roulage à plat de type « PAX system ». On reconnaît une jante 21 et un anneau de soutien 41 selon l'art antérieur monté sur cette jante. Le pneumatique n'est pas représenté. La largeur $L_1$ de l'anneau de soutien 41 est de 120 mm, sa hauteur $h_1$ de 40 mm. Un ensemble roulant équipé d'un anneau de ce type peut atteindre une mobilité importante : après une chute de la pression de gonflage du pneumatique, le véhicule équipé de cet ensemble roulant peut encore parcourir une distance de 200 km à une vitesse de 80 km/h.

La figure 3 représente schématiquement, en section méridienne, une jante 22 et un anneau de soutien 42 selon l'invention monté sur cette jante. De nouveau, le pneumatique n'est pas représenté. La largeur $L_2$ de l'anneau est de 60 mm, sa hauteur $h_2$ de 30 mm ; ses dimensions sont donc significativement réduites par rapport à un anneau de soutien selon l'art antérieur. Si un tel anneau est utilisé dans un ensemble roulant d'un véhicule non équipé du système selon l'invention, la mobilité de l'ensemble roulant et le comportement du véhicule en mode étendu sont significativement dégradés.

Cette difficulté est éliminée par l'utilisation d'un dispositif de régulation électronique du comportement dynamique adapté, associant une unité d'antiblocage des roues (ABS) et une unité d'antipatinage (ASR).

Le dispositif de régulation électronique du comportement dynamique selon l'invention est connu sous le sigle ESP (« Electronic Stability Program »). Par souci de concision, le dispositif de régulation électronique du comportement dynamique sera donc appelé « dispositif ESP ».

Le dispositif ESP selon l'invention tire avantage de plusieurs observations :

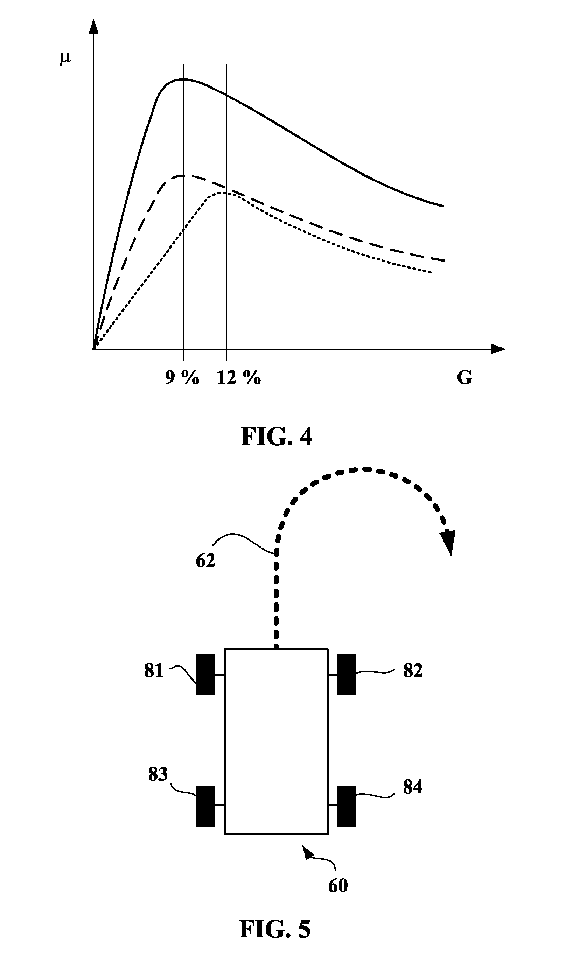

Premièrement, il a été constaté que les caractéristiques de freinage d'un ensemble roulant pour roulage à plat du type « PAX system » diffèrent des caractéristiques d'un ensemble roulant traditionnel ou du type « SST ». Une des différences est illustrée dans la figure 4 qui montre la dépendance du coefficient de frottement μ du taux de glissement G dans l'aire de contact (« loi μ(G) »). Comme cela est bien connu de la personne du métier, G se définit comme le rapport entre la vitesse de glissement pneu/sol et la vitesse du véhicule :

$$G = \frac{\omega \cdot R - V}{V}$$

où ω est la vitesse angulaire de la roue, R est le rayon de roulement et V est la vitesse du véhicule. Pour V différent de zéro, le taux de glissement G atteint 100 % lorsque la roue est bloquée (ω = 0). La figure 4 montre l'allure de la loi μ(G) sur sol sec pour un ensemble roulant avec un pneumatique gonflé à la pression de service (courbe pleine), ainsi que pour des ensembles roulants comprenant un pneumatique à pression de gonflage nulle, de type « SST » (courbe en tireté) et de type « PAX system » (courbe en pointillés). Pour le pneumatique de type « SST » à pression de gonflage nulle, le coefficient de frottement atteint sa valeur maximale au même taux de glissement (environ 9 %) que pour le pneumatique gonflé à la pression de service. Pour le pneumatique de type « PAX system », par contre, la valeur maximale du coefficient de frottement est atteinte à un taux de glissement supérieur (environ 12 %). Un dispositif ESP qui chercherait à optimiser le freinage en maintenant un taux de glissement de 9 % - ce qui convient pour un pneumatique conventionnel (et pour un pneumatique de « SST » en roulage à plat) - n'utiliserait pas tout le potentiel de frottement du pneumatique de type « PAX system » en roulage à plat. Lorsqu'un véhicule est équipé de ce type de pneumatiques, il est donc avantageux d'utiliser un dispositif ESP qui tienne compte de la pression de gonflage des pneumatiques : lors d'un freinage, on vise un taux de glissement de 9 % si le pneumatique est gonflé à sa pression de service, de 12 % si le pneumatique est à plat.

Deuxièmement, l'utilisation d'un anneau de soutien d'une largeur réduite a comme conséquence directe de diminuer la résistance que le pneumatique peut opposer à des efforts latéraux lorsqu'il est à plat. Ceci a tendance à réduire la stabilité latérale du véhicule et à dégrader son comportement et son guidage. C'est notamment le cas lorsque le véhicule s'engage dans un mouvement de lacet où le pneumatique subit un effort latéral. S'il ne résiste pas à cet effort latéral, le véhicule perd sa stabilité et part « en tête-à-queue ». Si l'on se met dans la configuration où le véhicule est équipé de pneumatiques de type « PAX system » et où le pneumatique roule à plat, on mesure l'importance de disposer d'un anneau de soutien large. Plus on diminue la largeur de l'anneau de soutien, et plus on risque de dégrader la stabilité du véhicule. C'est une des raisons qui a limité la miniaturisation de l'anneau de soutien, et par là même la réduction de son poids.

L'invention propose de franchir cet obstacle à la diminution du poids de l'ensemble roulant en combinant un anneau de soutien de largeur réduite avec un dispositif ESP permettant de conserver la stabilité et la capacité de freinage du véhicule dans une situation de roulage à plat.

L'avantage de cette approche peut être illustré en considérant une manoeuvre de type « J-turn », comme cela est représenté schématiquement à la figure 5. Pendant une manoeuvre de ce type, le véhicule 60 suit une trajectoire comme celle suggérée par la flèche 62. La personne du métier comprendra que le rayon de courbure du virage est en général plus grand par rapport aux dimensions du véhicule que cela est indiqué dans la figure.

Si on considère le cas où le véhicule est équipé de pneumatiques de type « PAX system » et où le pneumatique 81 roule à plat, le véhicule aura tendance à sous-virer. Cette difficulté est surmontée à l'aide d'un dispositif ESP permettant de freiner les pneumatiques 83 et 84 et de réduire ainsi l'effort de freinage sur le pneumatique 81.

Une série d'essais a été effectuée pour apprécier le comportement d'un système selon l'invention dans des conditions de roulage normales (le pneumatique étant gonflé) et en roulage à plat. Les essais ont été conduits à la fois avec un dispositif ESP de série et avec un dispositif ESP adapté (« ESP optimisé ») de façon à déterminer la marge d'amélioration accessible par une adaptation des algorithmes à l'ensemble roulant utilisé. Les essais ont été réalisés avec un véhicule Audi A4 ; le tableau 1 résume les dimensions des ensembles roulants utilisés :

Tableau 1

| | | Ensemble roulant « A » (témoin) | Ensemble roulant « B » (selon l'invention) |
|---|---|---|---|
| Roue | | 205x440A | 205x440A |
| Anneau de soutien | Rayon (mm) | 440 | 440 |
| | Largeur (mm) | 120 | 60 |
| | Hauteur (mm) | 40 | 40 |
| Pneumatique | | 215-650R440 | 215-650R440 |

(suite)

|  | Ensemble roulant « A » (témoin) | Ensemble roulant « B » (selon l'invention) |
|---|---|---|
|  |  |  |
| Poids total (kg) | 23.6 | 22.1 |

Le tableau 2 résume les résultats obtenus avec ces deux ensembles roulants dans des essais de freinage sur sol sec (vitesse avant freinage : 100 km/h ; on mesure la distance parcourue jusqu'à l'arrêt du véhicule) à une température ambiante de 24° C, et dans des essais de double changement de file selon la norme ISO 3888-1. Ce deuxième type d'essai consiste à effectuer des manoeuvres d'évitement d'un obstacle et à déterminer la vitesse maximale d'entrée à laquelle il est possible de suivre la trajectoire imposée. Lorsque le pneu est dégonflé, le tableau donne deux valeurs, selon que le pneu dégonflé (monté à l'arrière du véhicule) se trouve du côté du véhicule intérieur ou extérieur par rapport au centre de courbure de la trajectoire au début du premier changement de file. Toutes les valeurs ont été ramenées à celles obtenues pour le témoin (« A ») avec le dispositif ESP standard et le pneumatique gonflé, arbitrairement fixées à 100.

Tableau 2

| | Distance de freinage sur sol sec | | |
|---|---|---|---|
| Ensemble roulant | Pneu gonflé ESP standard | Pneu dégonflé ESP standard | Pneu dégonflé ESP optimisé |
| « A » | 100 | 87 | 92 |
| « B » | 100 | 81 | 92 |
| | Décélération sur sol sec | | |
| Ensemble roulant | Pneu gonflé ESP standard | Pneu dégonflé ESP standard | Pneu dégonflé ESP optimisé |
| « A » | 100 | 89 | 93 |
| « B » | 100 | 84 | 92 |
| | Double changement de file ISO : vitesse max. initiale | | |
| Ensemble roulant | Pneu gonflé ESP standard | Pneu dégonflé ESP standard | Pneu dégonflé ESP optimisé |
| « A » | 100 | 71/70 | 81/81 |
| « B » | 96 | 71/68 | 81/80 |

Ces résultats mettent en évidence un comportement satisfaisant du système selon l'invention par rapport à un système PAX standard. On constate également un certain potentiel d'amélioration par l'utilisation d'un dispositif ESP adapté. En ce qui concerne le freinage sur sol sec, l'optimisation de l'ESP résulte en une réduction de la distance de freinage et en une augmentation de la décélération comprises entre environ 5 et 10 %. Les résultats obtenus avec l'ESP optimisé sont sensiblement identiques pour les deux ensembles roulants différents, alors que l'ensemble roulant équipé de l'anneau de soutien moins large obtient des résultats moins satisfaisants lorsque l'ESP standard est utilisé. L'emploi de l'ESP optimisé permet également d'augmenter la vitesse maximale initiale dans les essais de double changement de file.

D'autres essais ont été effectués avec l'ensemble roulant selon l'invention (« B ») ; les résultats sont résumés dans le tableau 3. Toutes les valeurs ont été normalisées par rapport aux valeurs obtenues avec l'ensemble roulant « B » avec le pneu gonflé ; les différences entre les résultats d'essais identiques pour l'ensemble roulant « B » qui apparaissent dans les tableaux 2 et 3 s'expliquent par la différence dans la valeur prise comme référence.

Tableau 3

| Paramètre | Ensemble roulant « B » Pneu gonflé ESP standard | Ensemble roulant « B » Pneu dégonflé ESP standard | Ensemble roulant « B » Pneu dégonflé ESP optimisé |
|---|---|---|---|
| Freinage sur sol sec : distance | 100 | 81 | 91 |

(suite)

| Paramètre | Ensemble roulant « B » Pneu gonflé ESP standard | Ensemble roulant « B » Pneu dégonflé ESP standard | Ensemble roulant « B » Pneu dégonflé ESP optimisé |
|---|---|---|---|
| Freinage sur sol sec: décélération | 100 | 84 | 92 |
| Double changement de file: vitesse max. initiale | 100 | 74/71 | 84/83 |
| Stabilité « J-turn » : Vitesse max. initiale | 100 | 91 | 97 |
| Confort de mise en oeuvre (notation subjective) | 100 | 80 | 70 |
| Mobilité: vitesse (notation subjective) | 100 | 70 | 80 |

Dans les essais de type « J-turn» l'effet bénéfique de l'optimisation de l'ESP est significatif : la vitesse maximale initiale possible augmente de 71 km/h à 76 km/h, ce qui est très près de la vitesse maximale possible avec un pneumatique gonflé (78 km/h).

Le tableau 3 donne également les résultats d'une évaluation du confort de mise en oeuvre et de la mobilité. Cette évaluation est subjective : elle reflète le ressenti du conducteur lors des essais mentionnés plus haut, au moment où agit le dispositif ESP. Les manoeuvres sont effectuées avec le pneu dégonflé à l'avant, puis à l'arrière du véhicule ; on retient la moins bonne des deux notes. Le dispositif ESP standard répond relativement tard, ce qui est ressenti comme plus confortable, à condition bien sûr que l'intervention ne soit pas trop forte. Le dispositif ESP optimisé intervient relativement plus tôt et plus fortement, ce qui améliore la sécurité mais dégrade légèrement le confort du conducteur.

Enfin, la mobilité de l'ensemble roulant, ou plus particulièrement la vitesse à laquelle le véhicule peut rouler en mode étendu, a été évaluée de manière subjective. De nouveau, les manoeuvres sont effectuées avec le pneu dégonflé à l'avant, puis à l'arrière du véhicule ; on retient la moins bonne des deux notes. Le système comportant l'ESP optimisé permet une augmentation de la vitesse de l'ordre de 10 pour cent, c'est-à-dire d'environ 10 km/h.

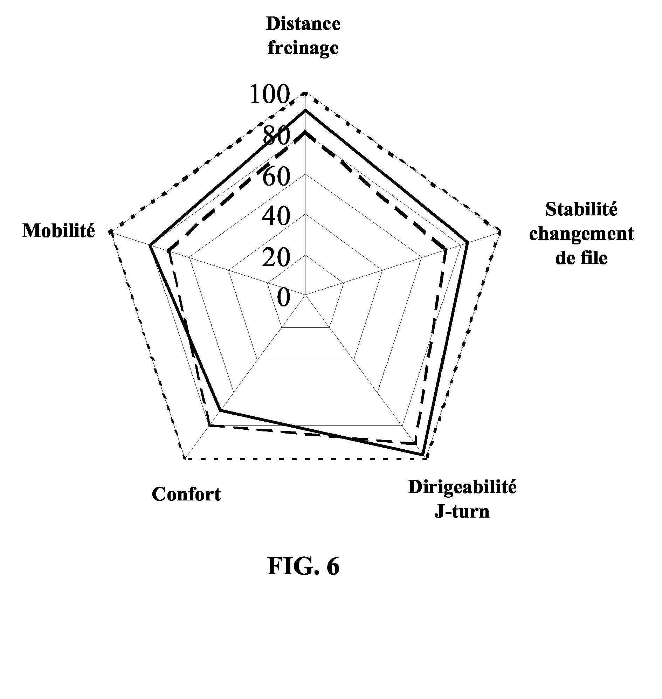

La figure 6 résume ces résultats en un diagramme en araignée. La courbe en pointillés et la courbe en tireté correspondent respectivement aux résultats obtenus pour un pneu gonflé et un pneu dégonflé avec l'ESP standard, la courbe pleine aux résultats pour le pneu dégonflé avec l'ESP optimisé.

**Revendications**

1.  Système, comprenant :

    (1) au moins un ensemble roulant formé par une jante, un pneumatique et un anneau de soutien de bande de roulement du pneumatique, destiné à supporter la charge du pneumatique en cas de perte notable de pression ;
    (2) un dispositif de régulation électronique du comportement dynamique d'un véhicule équipé de l'ensemble roulant,
    le système étant **caractérisé en ce que** le ratio $l$/L entre la largeur axiale $l$ de l'anneau de soutien et la largeur axiale L de la bande de roulement est inférieur ou égal à 0.30.

2.  Système, comprenant :

    (1) au moins un ensemble roulant formé par une jante, un pneumatique et un anneau de soutien de bande de roulement du pneumatique, destiné à supporter la charge du pneumatique en cas de perte notable de pression ;
    (2) un dispositif de régulation électronique du comportement dynamique d'un véhicule équipé de l'ensemble roulant,
    le système étant **caractérisé en ce que** le ratio h/H entre la hauteur radiale h de l'anneau de soutien et la hauteur radiale H du pneumatique est inférieur ou égal à 0.35.

3.  Système, comprenant :

(1) au moins un ensemble roulant formé par une jante, un pneumatique et un anneau de soutien de bande de roulement du pneumatique, destiné à supporter la charge du pneumatique en cas de perte notable de pression ;
(2) un dispositif de régulation électronique du comportement dynamique d'un véhicule équipé de l'ensemble roulant,

le système étant **caractérisé en ce que** le ratio l/L entre la largeur axiale *l* de l'anneau de soutien et la largeur axiale L de la bande de roulement est inférieur ou égal à 0.30 et **en ce que** le ratio h/H entre la hauteur radiale h de l'anneau de soutien et la hauteur radiale H du pneumatique est inférieur ou égal à 0.35.

4. Système selon l'une des revendications précédentes, **caractérisé en ce que** le système comprend un moyen permettant de détecter que l'anneau de soutien est en contact avec le pneumatique et **en ce qu'**au moins un paramètre d'un algorithme du dispositif de régulation est modifié lorsqu'un contact entre l'anneau de soutien et le pneumatique est détecté.

5. Système selon la revendication 4, **caractérisé en ce que** le moyen pour détecter un contact entre l'anneau de soutien et le pneumatique est choisi parmi : un capteur mécanique de contact, un capteur de pression, un moyen d'analyse des vitesses de rotation de l'ensemble des roues du véhicule, un moyen d'analyse des accélérations verticales de l'ensemble des roues du véhicule, un détecteur de vibrations caractéristiques, un détecteur de signaux acoustiques caractéristiques.

FIG. 1

ART ANTERIEUR

$L_1$

41

$h_1$

21

**FIG. 2 - ART ANTERIEUR**

$L_2$

42

$h_2$

22

**FIG. 3**

**FIG. 4**

**FIG. 5**

**FIG. 6**

**EP 1 681 178 A1**

**Office européen des brevets**

**RAPPORT DE RECHERCHE EUROPEENNE**

Numéro de la demande

EP 06 10 0042

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 486 356 A (SUMITOMO RUBBER INDUSTRIES LTD) 15 décembre 2004 (2004-12-15) | 1-3 | INV. B60C17/06 |
| Y | * alinéa [0030]; figures 1a,1b * <br> * alinéa [0042]; figure 5 * | 4,5 | |
| X | EP 0 265 656 A (CONTINENTAL AG) 4 mai 1988 (1988-05-04) <br> * abrégé; figures * | 1-3 | |
| X | US 2003/150538 A1 (CERETTA RENATO) 14 août 2003 (2003-08-14) <br> * abrégé; figures * | 1-3 | |
| Y,D | WO 2004/101336 A (ROBERT BOSCH GMBH; SOCIETE DE TECHNOLOGIE MICHELIN; MICHELIN RECHERCHE) 25 novembre 2004 (2004-11-25) <br> * abrégé * <br> * page 3, ligne 38 - page 4, ligne 10 * | 4,5 | |
| X | WO 01/08905 A (SOCIETE DE TECHNOLOGIE MICHELIN; MICHELIN RECHERCHE ET TECHNIQUE S.A;) 8 février 2001 (2001-02-08) <br> * page 6, alinéa 2; figure 1 * | 1 | DOMAINES TECHNIQUES RECHERCHES (IPC) <br><br> B60C |
| X | US 6 076 578 A (MICHELOT ET AL) 20 juin 2000 (2000-06-20) <br> * figure 1 * | 1 | |
| X | EP 0 679 541 A (NISHI, MASAAKI) 2 novembre 1995 (1995-11-02) <br> * figure 1 * | 1 | |
| X | FR 2 809 348 A (SOCIETE DE TECHNOLOGIE MICHELIN) 30 novembre 2001 (2001-11-30) <br> * figures 4,5 * | 2 | |

Le présent rapport a été établi pour toutes les revendications

| Lieu de la recherche | Date d'achèvement de la recherche | Examinateur |
|---|---|---|
| Munich | 31 mars 2006 | Vessière, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

12

**ANNEXE AU RAPPORT DE RECHERCHE EUROPEENNE
RELATIF A LA DEMANDE DE BREVET EUROPEEN NO.**

EP 06 10 0042

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2006

| Document brevet cité au rapport de recherche | | Date de publication | Membre(s) de la famille de brevet(s) | | Date de publication |
|---|---|---|---|---|---|
| EP 1486356 | A | 15-12-2004 | CN | 1572546 A | 02-02-2005 |
| | | | JP | 2005001426 A | 06-01-2005 |
| | | | US | 2004244892 A1 | 09-12-2004 |
| EP 0265656 | A | 04-05-1988 | DE | 3636631 A1 | 05-05-1988 |
| US 2003150538 | A1 | 14-08-2003 | BR | 0204316 A | 18-02-2003 |
| | | | CN | 1460075 A | 03-12-2003 |
| WO 2004101336 | A | 25-11-2004 | BR | 0407443 A | 31-01-2006 |
| | | | DE | 10320828 A1 | 09-12-2004 |
| | | | EP | 1625057 A1 | 15-02-2006 |
| WO 0108905 | A | 08-02-2001 | AT | 279325 T | 15-10-2004 |
| | | | DE | 60014927 D1 | 18-11-2004 |
| | | | DE | 60014927 T2 | 02-02-2006 |
| | | | EP | 1206357 A1 | 22-05-2002 |
| | | | ES | 2230127 T3 | 01-05-2005 |
| | | | FR | 2797224 A1 | 09-02-2001 |
| | | | PT | 1206357 T | 28-02-2005 |
| US 6076578 | A | 20-06-2000 | CA | 2217098 A1 | 07-04-1998 |
| | | | EP | 0834407 A1 | 08-04-1998 |
| | | | FR | 2754215 A1 | 10-04-1998 |
| | | | JP | 10119520 A | 12-05-1998 |
| EP 0679541 | A | 02-11-1995 | CN | 1114616 A | 10-01-1996 |
| | | | JP | 7290913 A | 07-11-1995 |
| FR 2809348 | A | 30-11-2001 | AUCUN | | |

EPO FORM P0460

Pour tout renseignement concernant cette annexe : voir Journal Officiel de l'Office européen des brevets, No.12/82